# EUROPEAN PATENT APPLICATION

(11) **EP 2 998 054 A1**
(43) Date of publication of application: **23.03.2016**
(21) Application number: 14185535.3
(22) Date of filing: 19.09.2014
(51) Int. Cl.: B23D 45/12

(54) **Cutting device**

(71) Applicant: ALSTOM Technology Ltd, 5400 Baden (CH)
(72) Inventor: Stenz, Valentin, 5453 Remetschwil (CH); Winterberg, Alfred, 4600 Olten (CH); Vergari, Alessio, 5242 Birr (CH)
(74) Representative: Bernotti, Andrea

(57) **Abstract**

The present invention generally relates to pipelines maintenance and renovation. More in particular, the present invention relates to a cutting device (1), preferably employed to be inserted and advanced into a pipeline and operate a cutting of the same from the inside at a desired position. The cutting device is movable within the pipe by means of one or more feeding wires (5) connected thereto to provide a remote control means of the device. The device comprises a grinder aasembly (2) movable between a resting position and an operative position, a swivel mechanism (3) configured to orbit the grinder during the cutting around a longitudinal axis of the device and a clamping assembly (4) configured to align the cutting device (1) inside the pipe, when located at the desired cutting position.

## Description

### FIELD OF THE INVENTION

The present invention generally relates to pipelines maintenance and renovation. More in particular, the present invention relates to a cutting device, preferably employed to be inserted and advanced into a pipeline and operate a cutting of the same from the inside at a desired position.

### BACKGROUND

In conventional gas turbines, the cooling air distribution pipework is generally located in the inside of the plenum between two consecutive compressor vane carriers.

As well known, the lifetime of the pipeline is limited due to a number of factors, and breakage of the cooling air pipeline can occur.

In case of rupture of the compensator within the cooling air distribution pipework, according to the current practise it is necessary to replace the pipe by removing the engine outer casing including the external pipe work, upper lances and burners. Such operation has very important costs, as it entails several days of production loss since the machine needs to be stopped. The cost can also vary depending on the particular location. Therefore, disassembling the engine to intervene for rectifying the broken pipe usually involves high costs to bear.

### SUMMARY OF THE INVENTION

It is an object of the present invention to solve the aforementioned technical problems with reference to the state of the art by providing a cutting device as substantially defined in independent claim 1.

Preferred embodiments are defined in correspondent dependent claims.

As it will appear clear from the detailed description of some exemplary, and not limiting, preferred embodiments of the invention, the cutting device is adapted to be introduced and advanced into the pipe in order to provide a cutting operation from the inside. The cutting device is movable within the pipe by means of one or more feeding wires connected thereto to provide a remote control means of the device. More in particular, the device comprises a grinder assembly movable between a resting position and an operative position, a swivel mechanism configured to orbit the grinder assembly during the cutting around a longitudinal axis of the device and a clamping assembly configured to align the cutting device inside the pipe, when located at the desired cutting position.

According to an aspect of the invention, the feeding wires comprise a grinder wire configured to remotely operate the grinder between the operating and resting positions.

According to a further aspect of the invention, the grinder assembly comprises a cutting disc mounted on a sled.

According to a further aspect of the invention, the grinder assembly comprises a compressed air feeding mechanism.

According to an aspect of the invention, the feeding wires comprise a first compressed air supply wire, associated to the compressed air feeding mechanism for operating the grinder assembly.

According to a further preferred aspect of the invention, the feeding wires comprise a swivel wire configured to remotely operate the swivel mechanism.

According to a further preferred aspect of the invention, the clamping assembly comprises two rows of retractable pistons; each row comprising at least three pistons located angularly equidistant at a common axial position along the longitudinal axis A. Preferably, the clamping assembly comprises a compressed air circuit configured to operate the retractable pistons.

According to a further aspect of the invention, the feeding wires comprise a second air supply wire associated to the compressed air circuit for operating the retractable pistons.

In case of pipe breakage inside the plenum of the machine, it is necessary to remove the upper section of the cooling air pipework on a closed engine through the extraction flange, and then cut the remaining broken end of the pipe from the inside. After insertion of the cutting device inside the pipe to be cut and removed, the latter is advanced up to the desired location. After the cutting is completed, the cutting device is retaken by means of the feeding wires and so is the cut pipe, which is carried by the cutting device as the grinder assembly extends radially outward and has a radius which is greater than the radius of the pipe.

After the broken pipe is cut and removed, it is possible to proceed with the installation of a new female-male cooling air pipeline to the compressor vane carrier.

The cutting device is advanced, power fed, and operated by means of the feeding wires which are connected to the device on one side only. In fact, for this type of applications, access from the opposite side may not be granted.

Radial feed mechanism must have enough travel to allow the pipe to be completely cut through with cutting disc, in other words the operative position of the grinder assembly must extend radially of the right amount such to reach and cut the surrounding pipe.

A reduction gear may be installed to carefully swivel the grinder for approximately 380°, in order to ensure a complete cut of the broken pipe.

Debris (grinding dust) created in the engine are small enough to pass through the cooling channels without consequential damage to inner parts.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 shows a longitudinal and transversal section of a gas turbine where the cooling air distribution pipework is located;
Figure 1A shows particulars of figure 1 before and after the cutting of a broken pipe has been executed;
Figure 2 shows a perspective view of the cutting device 1 according to the present invention;
Figure 2A shows the cutting device of figure 1 in a front and rear assembled view.
Figure 3 and 4 show various particulars of the grinder assembly of the cutting device according to the invention;
Figure 5 shows various particulars of the swivel mechanism of the cutting device according to the invention;

### DETAILED DESCRIPTION OF THE DRAWINGS

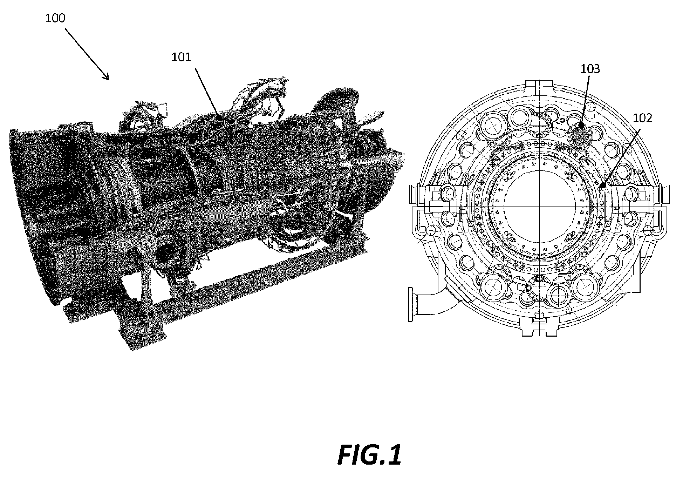

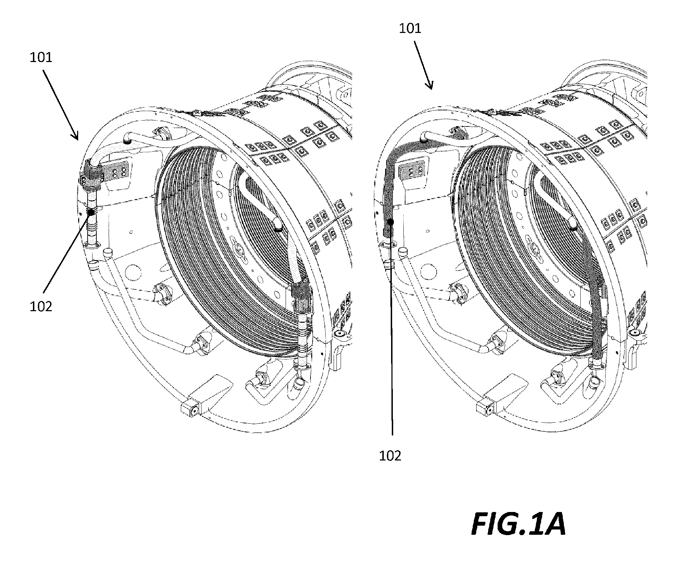

With reference to figure 1, it is showed a gas turbine generally referred to with the numeral 100. On the left it is depicted a longitudinal section of the gas turbine with emphasis on an area 101 which indicates a plenum of the machine where the breakage of a compensator pipe of the air distribution pipework can occur. With reference to the right part of the figure, it is shown a transversal section of the machine, where the compensator pipe is indicated with numeral 102. The section also shows an extraction flange 103 through which the compensator 102 is reachable if breakage occurs.

With reference to figure 1A the area 101 is shown in a perspective view. On the left it is depicted the compensator 102 before breakage, while on the right it is shown a new compensator fit in the same position after the cutting of the broken portion has been executed.

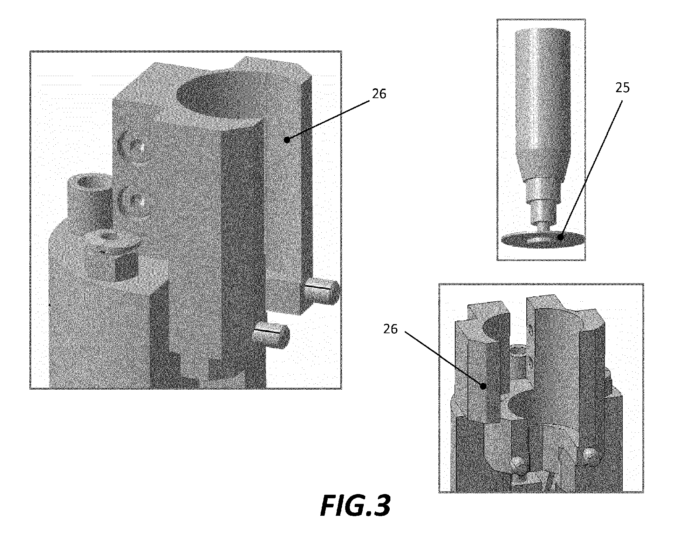

Making now reference to next figure 3, it is shown a cutting device 1 according to the present invention. In particular, the figure shows the cutting device 1 with all its constituent parts visible.

The cutting device 1 defines altogether an elongated body having a longitudinal axis **A** and two opposite sides, extending radially, generally indicated with 11 and 12. The elongated body is shaped such to be adapted for insertion into the pipe to be cut from the inside.

More in particular, the cutting device comprises a grinder assembly 2 which is, as will be explained below, movable between a resting position and an operative position, the latter extending radially outwards with respect to the longitudinal axis A. The cutting device 1 is inserted into the pipe to be cut with the grinder assembly 2 in the resting position, and it is moved to the operating position when the device 1 has reached the correct location along the pipe to operate the cutting.

The cutting device 1 further comprises a swivel mechanism 3, configured to turn the grinder assembly 2 around the longitudinal axis **A** when arranged in the operative position, in order to cut a surrounding pipe (not shown in the figure).

The grinder assembly 2 comprises a cutting disc 25 mounted on a sled 26. More in particular, the cutting disc 25 is operated by a compressed air feeding mechanism, generally indicated in the figure with the numeral 27.

The technical knowledge necessary to implement such cutting disc 25 operated by a compressed air feeding mechanism is considered known to those who are skilled in the art and therefore a detailed description won't herein be given.

The cutting device 1 also comprises a clamping assembly 4, configured to centre the device 1 into the pipe.

In this preferred and not limiting embodiment, the clamping assembly 4 comprises two rows 41 and 42 of retractable pistons. Each row comprises three pistons (in the figure only pistons 411 and 412 of row 41 and pistons 421 and 422 of row 42 are visible) located angularly equidistant at a common axial position along the longitudinal axis A. Each piston is then spaced 120 degrees from the other two along the same row. The clamping assembly 4 comprises a compressed air circuit configured to operate the retractable pistons which positions and centres the device inside the pipe for operating a complete cut. The configuration shown in the described embodiment of two rows, each row comprising three pistons angularly equidistant from each other, shows the minimum number of pistons necessary to achieve the centring and the alignment of the cutting device inside the pipe along its longitudinal axis A.

Preferably, clamping assembly 4 is operated by a compressed air circuit.

Similarly to the compressed air feeding mechanism for operating the grinder assembly 2, the compressed air circuit for operating the clamping assembly is considered to be known by those who are skilled in the art, and therefore a detailed description won't herein be given. Furthermore, the cutting device 1 comprises feeding wires, generally indicated with the reference number 5, which are all connected to a common side 11 of the elongated body. Advantageously, the feeding wires 5 are configured such to provide means for moving the cutting device 1 through the pipe. Preferably, the feeding wires may all be grouped into a single common external wire, to provide an even easier and more suitable means for advancing the device 1 inside the pipe and to take it back once the cutting has been executed (embodiment not shown). As the wires are connected to the elongated body on one side only, this enables a total control of the cutting device 1 in remote downstream or upstream the cutting position.

The feeding wires 5 comprise a grinder wire 51, configured to remotely operate the grinder assembly 2 in order to move it from the resting position to the operative position and vice versa.

The feeding wires 5 also comprise a swivel wire 53 associated to the swivel mechanism 3, as it will be explained below.

Moreover, the feeding wires 5 comprise an air supply wire 52 associated to the compressed air feeding mechanism 27 which operates the grinder assembly 2, and a second air supply wire 54 which, in turn, operates the compressed air circuit for activating the retractable pistons of the clamping assembly 4.

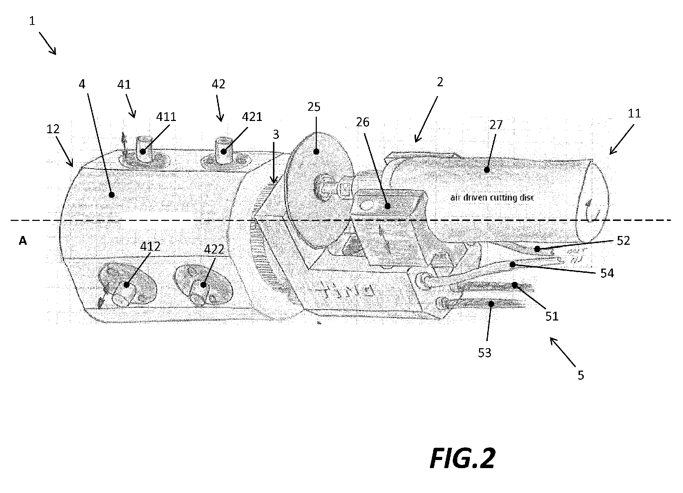

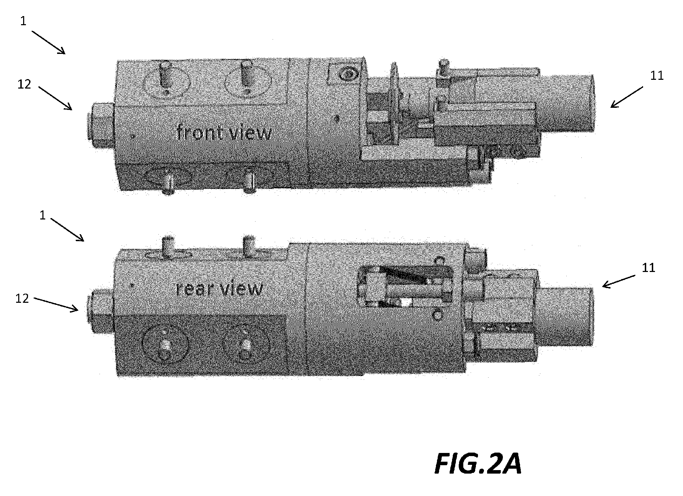

With reference now to following figure 2A, the cutting device 1 is shown in an assembled configuration in a front and rear views.

With reference to figure 3, different parts of the grinder assembly are shown. In particular, in the figure it is shown the cutting disc 25, which is mounted on the sled 26.

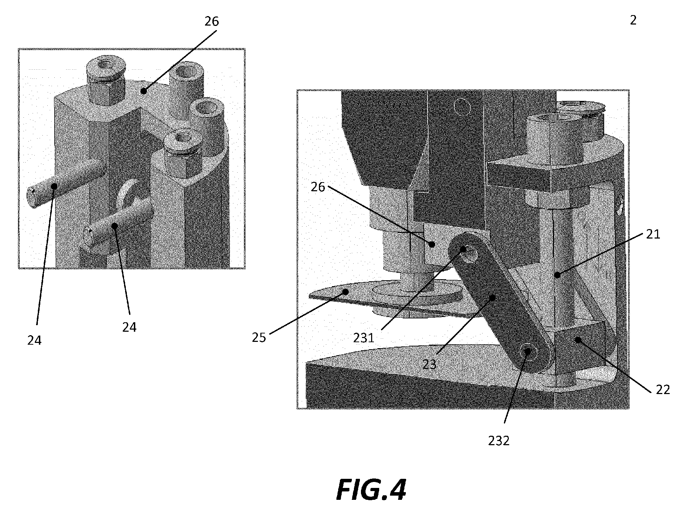

Next figure 4 shows more in particular the grinder assembly 2 and its constituent parts.

The grinder wire (not shown in the figure) is configured to remotely operate a threaded bar 21 to which it is connected. The rotation of the bar 21, enabled by the rotation of the grinder wire, triggers the travel of a threaded feed guide 22. The feed guide 22 is connected to the grinder assembly 2, and more specifically to the sled 26, by means of a bracket 23. The bracket 23 has a first end 231 hinged to the sled 26 and a second end 232 hinged to the feed guide 22. The rotation given to the grinder wire in one sense triggers the rotation of the threaded bar 21 which, in turn, commands the travel of the feed guide 22 along the bar 21. When the feed guide 22 is moved along the direction of arrow **O,** as indicated in the figure, the sled 26 which carries the cutting disc 25, is moved by the hinged bracket 23 along guides 26 arranged in a radial direction. So, the rotation of the grinder wire in one sense (depending on the type of the tread) determines the travel of the feed guide 22 in the direction indicated by arrow **O.** This causes the sled 26 to extend radially outwards, thus moving the grinder assembly 2 into the operating position. In this configuration, the cutting disc 25 is faced against the walls of the surrounding pipe (not shown) to be cut. In the same way, rotating the grinder wire in the opposite direction causes the feed guide to travel in the direction shown by arrow **R** of the figure, which causes the sled 26 to move back into the resting position, which allows the advancement of the cutting device within the pipe.

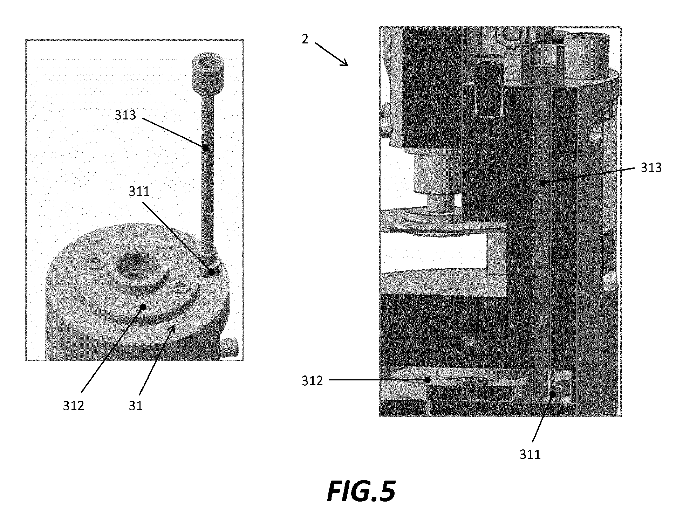

Lastly, with reference to the following figure 5, the swivel mechanism 3 is shown in greater detail.

Preferably, swivel mechanism 3 comprises a gear box 31. The gear box 31 comprises a first gear wheel 311 integral to the grinder assembly 2, which is configured to orbit around a second gear wheel 312 integral to the clamping assembly (not shown).

The swivel wire (not shown in the figure) is configured to operate, by its rotation, the first gear wheel 311 be means of a connection bar 313. The rotation of the first great wheel 311 determines the orbiting of the same around the second gear wheel 312. Therefore, the grinder assembly 2 is capable of rotating around the longitudinal axis for executing the cutting.

Although the present invention has been fully described in connection with preferred embodiments, it is evident that modifications may be introduced within the scope thereof, not considering the application to be limited by these embodiments, but by the content of the following claims.

## Claims

1. A cutting device (1), adapted to be inserted into a pipe for cutting the pipe form the inside, the cutting device (1) defining an elongated body having a longitudinal axis **A** and two opposite sides (11, 12) extending radially, the cutting device (1) comprising:
- a grinder assembly (2) movable between a resting position and an operative position, wherein said operative position extends radially outwards with respect to the axis **A** of the cutting device (1);
- a swivel mechanism (3) associated to said grinder (2) configured to turn said grinder assembly (2) around the longitudinal axis **A** when in its operation position;
- a clamping assembly (4) configured to centre the cutting device (1) within the pipe;
- one or more feeding wires (5), said one or more feeding wires (5) being all connected to the body to the same side (11) and configured such to provide a means for moving the cutting device (1) through the pipe.

2. The cutting device (1) according to the preceding claim, wherein said one or more wires (5) comprises a grinder wire (51) configured to remotely operate said grinder assembly (2) between said operating and resting positions.

3. The cutting device (1) according to the preceding claim, wherein the grinder wire (51) is connected to a thread bar (21) adapted to operate a feed guide (22) screwed thereon, said feed guide (22) being in turn connected to said grinder assembly (2) by means of a bracket (23) having a first end (231) hinged to said grinder assembly (2) and a second end (232) hinged to said feed guide (22), and wherein said grinder assembly (2) is movable along radial guides (24).

4. The cutting device (1) according to any of the preceding claims, wherein said grinder assembly (2) comprises a cutting disc (25) mounted on a sled (26).

5. The cutting device (1) according to any of the preceding claims, wherein said grinder assembly (2) comprises a compressed air feeding mechanism (27).

6. The cutting device (1) according to the preceding claim, wherein said one or more feeding wires (5) comprise an air supply wire (52) associated to said compressed air feeding mechanism (27).

7. The cutting device (1) according to any of the preceding claims, wherein said swivel mechanism (3) comprises a gear box (31).

8. The cutting device (1) according to the preceding claim, wherein said gear box (31) comprises a first gear wheel (311) integral to said grinder assembly (2) configured to orbit around a second gear wheel (312) integral to said clamping assembly (4).

9. The cutting device (1) according to the preceding claim, wherein said one or more feeding wires (5) comprise a swivel wire (53) configured to remotely operate said first gear wheel (311).

10. The cutting device (1) according to any of the preceding claims, wherein said clamping assembly (4) comprises two rows of retractable pistons (41, 42), each row (41, 42) comprising at least three pistons (411, 412, 413; 421, 422, 423) located angularly equidistant at a common axial position along the longitudinal axis **A.**

11. The cutting device (1) according to the preceding claim, wherein said clamping assembly (4) comprises a compressed air circuit (43) configured to operate said retractable pistons (411, 412, 413; 421, 422, 423).

12. The cutting device (1) according to the preceding claim, wherein said one or more feeding wires (5) comprise a second air supply wire (54) associated to said air circuit (43).
